# EUROPÄISCHE PATENTSCHRIFT

(11) **EP 2 536 597 B1**
(45) Veröffentlichungstag und Bekanntmachung des Hinweises auf die Patenterteilung: **18.03.2015**
(21) Anmeldenummer: 11701978.6
(22) Anmeldetag: 26.01.2011
(51) Int. Cl.: B60R 25/02, B62D 5/00

(54) **LENKVORRICHTUNG FÜR EIN FAHRZEUG**
VEHICLE STEERING DEVICE
SYSTEME DE DIRECTION POUR VEHICULE

(30) Priorität: 15.02.2010 DE 102010001911
(43) Veröffentlichungstag der Anmeldung: 26.12.2012
(73) Patentinhaber: Robert Bosch GmbH, 70442 Stuttgart (DE)
(72) Erfinder: HENKE, Torsten, 71332 Waiblingen (DE)
(86) Internationale Anmeldenummer: PCT/EP2011/051018
(87) Internationale Veröffentlichungsnummer: WO 2011/098351

(56) Entgegenhaltungen:
- EP-A2- 1 249 375
- WO-A1-02/40336
- DE-A1- 4 446 613
- DE-A1-102004 037 617
- DE-A1-102005 058 176
- DE-A1-102008 018 560

## Beschreibung

### Stand der Technik

Die vorliegende Erfindung betrifft eine Lenkvorrichtung für ein Fahrzeug sowie ein Verfahren zum Blockieren einer Lenkvorrichtung.

In jüngster Zeit werden praktisch in allen Fahrzeugen Lenkvorrichtungen mit einer Unterstützung, z.B. elektrische Servolenkungen, verwendet. Bei derartigen elektrischen Servolenkungen erfasst üblicherweise ein Sensor einen Lenkvorgang eines Fahrers und steuert über eine Steuereinheit einen an der Lenksäule oder einem Lenkgestänge angeordneten Elektromotor. Dieser Elektromotor erzeugt dann ein entsprechendes Drehmoment, um den Lenkvorgang zu unterstützen. In Gefahrensituationen muss jedoch ein Blockieren der Lenkvorrichtung sichergestellt werden. Dies wird bisher mit separaten elektrischen Lenkradverriegelungen gelöst, welche an der Lenksäule montiert sind und welche ein Lochrad und einen elektrisch betriebenen Aktuator aufweisen, welcher mit dem Lochrad in Eingriff bringbar ist. Die bekannten Lösungen sind jedoch relativ aufwendig und benötigen insbesondere einen zusätzlichen Bauraum.

Aus der DE 10 2005 058 176 A1 ist eine Vorrichtung nach dem Oberbegriff des Anspruchs 1 bekannt.

Weiterhin ist aus der DE 44 46 613 A1 ein System bekannt, bei dem die gesamte Lenkung des Fahrzeugs bei dessen Stillstand blockiert werden kann. Sobald der Zündschlüssel abgezogen wird, kann ein über einen Bowdenzug verbundener Sperrstift in das Lenkgestänge eingreifen und damit das Lenkrad verriegeln.

### Offenbarung der Erfindung

Die erfindungsgemäße Lenkvorrichtung mit den Merkmalen des Anspruchs 1 weist demgegenüber den Vorteil auf, dass sie eine sehr kompakte und platzsparende Lösung für ein Blockieren der Lenkvorrichtung bereitstellt, wobei erfindungsgemäß eine Blockiereinrichtung direkt an einem Lenkantrieb einer elektrischen Servolenkung angeordnet ist. Dabei blockiert die Blockiereinrichtung den Lenkantrieb unmittelbar an einer Abtriebswelle des Lenkantriebs. Somit kann eine einfache und kostengünstige Lösung für die Blockiereinrichtung bereitgestellt werden, um z.B. in Gefahrsituationen den Lenkantrieb zu blockieren und somit eine Unterstützung durch den Lenkantrieb zu verhindern. Ferner kann der Lenkantrieb und die Blockiereinrichtung als ein montierbares Modul bereitgestellt werden, wodurch neben den Herstellungskosten auch Montagekosten bei den Fahrzeugherstellern reduziert werden können. Der Lenkantrieb kann an einer Lenksäule oder an einem Lenkgestänge angeordnet sein. Ferner umfasst die Lenkvorrichtung noch eine Arretiereinrichtung, welche eine Position der Blockiereinrichtung blockiert. Hierdurch wird ein zusätzliches Sicherheitsmerkmal erfüllt, da die Blockiereinrichtung selbst ihrerseits noch durch die Arretiereinrichtung arretiert wird. Dadurch kann auch in Extremsituationen ein sicheres Blockieren der Lenkvorrichtung erreicht werden. Um eine weitere Kostenreduktion zu ermöglichen, ist für den Lenkantrieb, die Blockiereinrichtung und die Arretiereinrichtung ein gemeinsames Steuergerät vorgesehen, welche durch das gemeinsame Steuergerät gesteuert werden. Dabei ist das Steuergerät derart ausgelegt, dass bei Vorhandensein einer Blockiereinrichtung und einer Arretiereinrichtung die Arretiereinrichtung nach der Blockiereinrichtung aktiviert wird. Dadurch wird eine Arretierung der Blockiereinrichtung in einem Zustand, in welchem die Blockiereinrichtung die Abtriebswelle nicht blockiert, verhindert.

Die Unteransprüche zeigen bevorzugte Weiterbildungen der Erfindung.

Vorzugsweise umfasst die Blockiereinrichtung eine Blockiergabel mit zwei Armen, über welche das Blockieren der Abtriebswelle erfolgt. Hierzu weist die Abtriebswelle vorzugsweise zwei abgeflachte Bereiche für einen Kontakt mit den Armen der Blockiergabel auf oder die Abtriebswelle umfasst einen zusätzlichen Adapter mit zwei abgeflachten Bereichen für einen Eingriff mit den beiden Armen, wobei der Adapter z.B. auf die Blockierwelle aufgeschoben ist. Hierbei kann beispielsweise eine Presspassung zwischen dem Adapter und der Abtriebswelle vorgesehen werden.

Weiter bevorzugt ist die Blockiereinrichtung derart am Lenkradantrieb angeordnet, dass eine Verfahrrichtung der Blockiereinrichtung senkrecht zur Mittelachse der Abtriebswelle ist.

Besonders bevorzugt umfasst die Arretiereinrichtung dabei einen Sperrschieber oder einen Haken, um die Blockiereinrichtung zu blockieren. Dadurch kann die Arretiereinrichtung sehr einfach und kostengünstig aufgebaut sein. Die Arretiereinrichtung kann dabei an einer beliebigen Position an der Blockiereinrichtung angreifen. Bevorzugt greift die Arretiereinrichtung im Bereich einer Blockiergabel oder einer Verbindung zwischen Blockiergabel einer Verbindung, zwischen Blockiergabel und einem Basiskörper der Blockiereinrichtung ein. Alternativ kann die Arretiereinrichtung auch an einem Gehäuse der Blockiereinrichtung angreifen und die Blockiereinrichtung arretieren.

Weiter bevorzugt umfasst die Arretiereinrichtung eine Diagnosevorrichtung zur Überprüfung einer erfolgreichen Arretierung der Blockiereinrichtung. Die Diagnosevorrichtung überwacht vorzugsweise eine Stromaufnahme der Arretiereinrichtung, vorzugsweise mittels Strom-Zeit-Verlaufskurven, oder durch Erfassung eines Stromflusses nach einem Kontakt der Blockiereinrichtung mit der Abtriebswelle. Es sei ferner angemerkt, dass vorzugsweise die Arretiereinrichtung zeitversetzt bei einer Aktivierung der Blockiereinrichtung mitaktiviert wird.

Vorzugsweise ist die Blockiergabel derart ausgelegt, dass sie, ähnlich einem Prinzip einer Rutschkupplung, ein Durchdrehen der Abtriebswelle bei Auftreten eines vorbestimmten Momentenbetrags ermöglicht. Hierzu weist die Blockiergabel vorzugsweise zwei Arme auf, welche gelenkig an einer Basis fixiert sind und welche mittels Federkraft in Position gehalten werden. Sollte ein vorbestimmtes Drehmoment an der Abtriebswelle überschritten werden, spreizen sich die beiden Arme entgegen der Federkraft nach außen auf und die Abtriebswelle dreht weiter. Durch diese Maßnahmen können insbesondere Beschädigungen an der Blockiereinrichtung aufgrund eines Auftretens eines zu großen Drehmoments an der Abtriebswelle vermieden werden.

Weiterhin betrifft die vorliegende Erfindung ein Verfahren zum Blockieren einer Lenkvorrichtung, wobei das Blockieren unmittelbar an einer Abtriebswelle eines Lenkantriebs erfolgt. Dabei erfolgt nach dem Blockieren der Abtriebswelle mittels der Blockiervorrichtung noch eine Arretierung der Blockiereinrichtung mittels einer Arretiereinrichtung. Weiter bevorzugt werden dabei der Lenkantrieb und die die Blockiervorrichtung und gegebenenfalls die Arretiereinrichtung mittels eines gemeinsamen Steuergeräts angesteuert, wobei insbesondere die Arretiereinrichtung nach einem Aktivieren der Blockiervorrichtung,aktiviert wird.

### Zeichnung

Nachfolgend werden bevorzugte Ausführungsbeispiele der Erfindung unter Bezugnahme auf die begleitende Zeichnung im Detail beschrieben. In der Zeichnung ist:
- Figur 1: eine schematische Schnittansicht einer Lenkvorrichtung gemäß einem Ausführungsbeispiel der Erfindung,
- Figur 2: eine schematische Seitenansicht einer Blockiereinrichtung von Figur 1,
- Figur 3: eine schematische Schnittansicht einer Lenkvorrichtung gemäß einem zweiten Ausführungsbeispiel in einem nicht blockierten Zustand,
- Figur 4: eine schematische Schnittansicht der Lenkvorrichtung von Figur 3 in einem blockierten Zustand, und
- Figur 5: eine schematische Schnittansicht einer Lenkvorrichtung gemäß einem dritten Ausführungsbeispiel der Erfindung in einem nicht blockierten Zustand.

### Bevorzugte Ausführungsformen der Erfindung

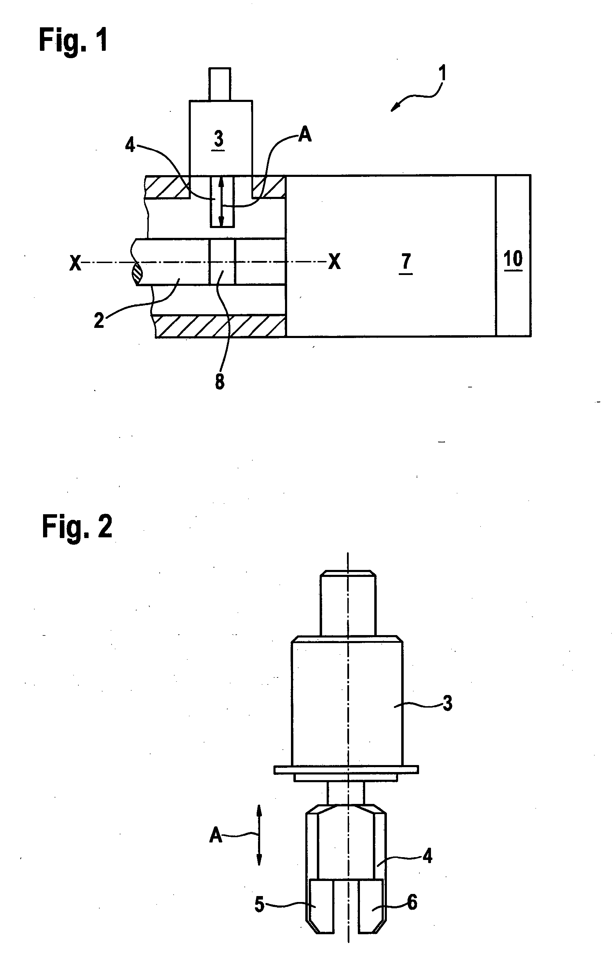

Nachfolgend wird unter Bezugnahme auf die Figuren 1 und 2 eine Lenkvorrichtung für ein Fahrzeug gemäß einem ersten Ausführungsbeispiel der Erfindung im Detail beschrieben.

Wie aus Figur 1 ersichtlich ist, umfasst die Lenkvorrichtung für ein Fahrzeug einen Lenkantrieb 1 mit einem Antriebsmotor 7 sowie einer Abtriebswelle 2. Die Abtriebswelle 2 ist mit einer Lenkwelle oder einem Lenkgestänge verbunden, um bei einem Lenkvorgang eine Servounterstützung zu ermöglichen. Somit ist der Lenkantrieb 1 eine elektrische Servolenkung zur Unterstützung eines Lenkvorgangs. Die Abtriebswelle 2 des Lenkantriebs 1 ist dabei über ein Getriebe mit dem Lenkgestänge oder der Lenksäule verbunden (nicht gezeigt). Ferner umfasst die Lenkvorrichtung dieses Ausführungsbeispiels eine Blockiereinrichtung 3 mit einer Blockiergabel 4. Die Blockiereinrichtung 3 ist im Detail in Figur 2 gezeigt. Die Blockiereinrichtung 3 ist ebenfalls ein elektrischer Aktuator und ermöglicht, dass die Blockiergabel 4, wie durch den Doppelpfeil A angedeutet linear bewegt werden kann. Die Blockiergabel 4 umfasst dabei einen ersten Arm 5 und einen zweiten Arm 6, welche am freien Ende der Blockiergabel 4 angeordnet sind.

Wie weiter aus Figur 1 ersichtlich ist, sind in der Abtriebswelle 2 auf Höhe der Blockiereinrichtung 3 abgeflachte Bereiche vorgesehen. Hierbei ist in Figur 1 lediglich ein abgeflachter Bereich 8 sichtbar, da der andere abgeflachte Bereich an der nicht gezeigten Rückseite der Abtriebswelle 2 angeordnet ist. An den abgeflachten Bereichen 8 sind in der Abtriebswelle 2 somit zwei Ausnehmungen gebildet, in welche die Arme 5, 6 der Blockiergabel 4 eingreifen können. Die Bewegungsrichtung A der Blockiergabel 4 ist dabei senkrecht zu einer Mittelachse X-X der Abtriebswelle 2 (vgl. Figur 1).

In Figur 1 ist der nicht blockierte Zustand der Abtriebswelle 2 gezeigt. Wenn nun beispielsweise eine Gefahrensituation vorhanden ist, und der Lenkantrieb 1 blockiert werden soll, aktiviert ein in dem Lenkantrieb 1 integriertes Steuergerät 10 die Blockiereinrichtung 3, so dass diese die Blockiergabel 4 mit ihren Armen 5, 6 an den abgeflachten Bereichen 8 in die Abtriebswelle 2 eingreift. Somit wird ein Direkteingriff der Blockiereinrichtung 3 in die Abtriebswelle 2 erreicht und ein Drehen der Abtriebswelle 2 verhindert. Vorzugsweise umfasst die Blockiereinrichtung 3 dabei ebenfalls einen elektromagnetischen Antrieb. Zum Lösen der Blockiereinrichtung 3 wird der Antrieb der Blockiereinrichtung 3 in umgekehrter Richtung angetrieben, so dass die Blockiergabel 4 wieder außer Eingriff von der Abtriebswelle 2 kommt.

Durch das erfindungsgemäß direkte Blockieren der Abtriebswelle 2 mittels der Blockiereinrichtung 3 wird ein besonders kompakter und kostengünstiger Aufbau erreicht. Die Blockiereinrichtung 3 ist dabei in den Lenkantrieb 1 integriert und wird über ein gemeinsames Steuergerät 10 gesteuert. Hierdurch kann ein kompaktes Modul für die elektrische Servolenkung mit integrierter Blockiereinrichtung bereitgestellt werden, welches einfach an verschiedenen Fahrzeugen montierbar ist.

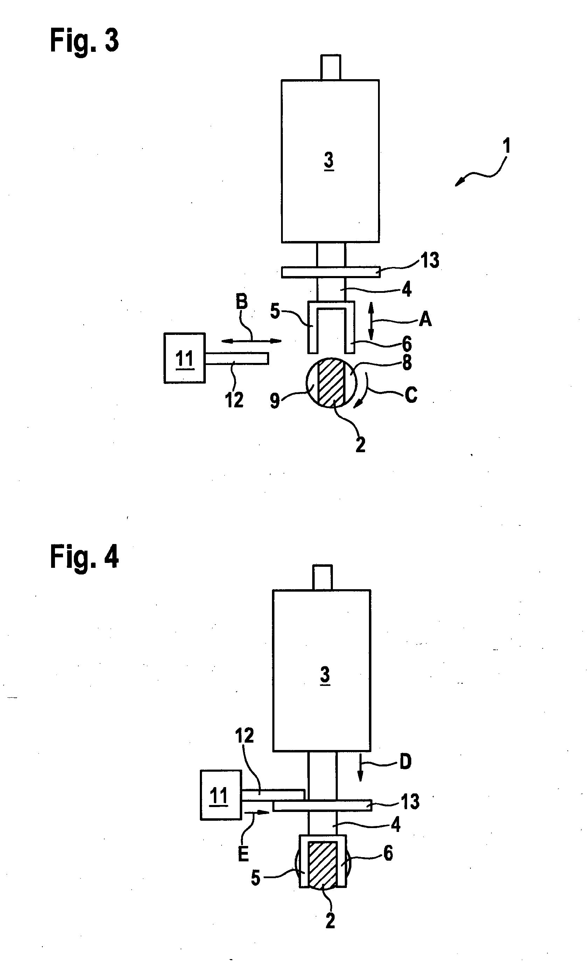

Die Figuren 3 und 4 zeigen einen Lenkantrieb gemäß einem zweiten Ausführungsbeispiel der Erfindung, wobei gleiche bzw. funktional gleiche Teile mit den gleichen Bezugszeichen wie im ersten Ausführungsbeispiel bezeichnet sind.

Der Lenkantrieb 1 des zweiten Ausführungsbeispiels umfasst zusätzlich noch eine Arretiereinrichtung 11, welche wie die Blockiereinrichtung 3 in den Lenkantrieb 1 integriert ist. Die Arretiereinrichtung 11 hat dabei die Aufgabe, eine Arretierung der Blockiereinrichtung 3 sicherzustellen, wenn diese die Abtriebswelle 2 blockiert. Die Arretiereinrichtung 11 umfasst dabei ein vorstehendes Element 12 in Form eines Stiftes, welches, wie durch den Doppelpfeil B angedeutet, in senkrechter Richtung zu einer Bewegungsrichtung A der Blockiergabel 4 bewegbar ist. Wie im ersten Ausführungsbeispiel ist in der Abtriebswelle 2 ein erster und ein zweiter abgeflachter Bereich 8, 9 vorgesehen, an welchen die Arme 5, 6 der Blockiergabel 4 in die Abtriebswelle 2 direkt eingreifen können. Eine Rotation der Abtriebswelle 2 ist durch den Pfeil C angedeutet. Die Arretiereinrichtung 11 ermöglicht ein redundantes Absichern des blockierten Zustands der Abtriebswelle 2 des Lenkantriebs.

Wenn beispielsweise eine Gefahrensituation auftritt, wird die Blockiereinrichtung 3 aktiviert und bewegt sich, wie in Figur 4 durch den Pfeil D angedeutet, senkrecht zur Mittelachse der Abtriebswelle 2. Hierbei kommen die Arme 5, 6 der Blockiergabel mit den abgeflachten Bereichen 8, 9 der Abtriebswelle 2 in Eingriff. An der Blockiergabel 4 ist ein umlaufender Flansch 13 vorgesehen, welcher ausgelegt ist, um mit dem vorstehenden Element 12 der Arretiereinrichtung 11 in Kontakt zu gelangen. Wie aus Figur 4 ersichtlich ist, wird nach Erreichen der Endposition der Blockiereinrichtung 3 die Arretiereinrichtung 11 aktiviert, so dass das vorstehende Element 12 in Richtung des Pfeils E, senkrecht zur Bewegungsrichtung A der Blockiergabel 4 bewegt wird. Hierbei hintergreift das vorstehende Element 12 den Flansch 13, so dass die Blockiereinrichtung 3 nicht mehr zurückgestellt werden kann. Die Arretiereinrichtung 11 wird dabei vorzugsweise mittels eines gemeinsamen Steuergeräts gesteuert, welche auch die Blockiereinrichtung 3 sowie den Lenkantrieb steuert. Hierbei kann in das gemeinsame Steuergerät auch eine Diagnoseeinrichtung (nicht dargestellt) integriert werden, um eine ordnungsgemäße Aktivierung der Arretiereinrichtung 11 und somit ein Arretieren der Blockiereinrichtung 3, sicher zu erfassen. Somit wird beim zweiten Ausführungsbeispiel eine zusätzliche Sicherheitseinrichtung verwendet, um einen ungewollten Antrieb der Abtriebswelle 2 zu verhindern. Die Arretiereinrichtung 11 greift dabei unmittelbar in die Blockiergabel 4 ein. Es sei hierbei jedoch angemerkt, dass die Arretiereinrichtung 11 auch an anderen Positionen an der Blockiereinrichtung 3, beispielsweise im Bereich der Arme 5, 6 oder im Bereich des Antriebs der Blockiereinrichtung 3 eingreifen kann. Somit zeigt das zweite Ausführungsbeispiel ein kompaktes Modul, welches neben dem Lenkantrieb sowohl eine Blockiereinrichtung 3 als auch als zusätzliche Sicherheitsvorrichtung noch eine Arretiereinrichtung 11 umfasst.

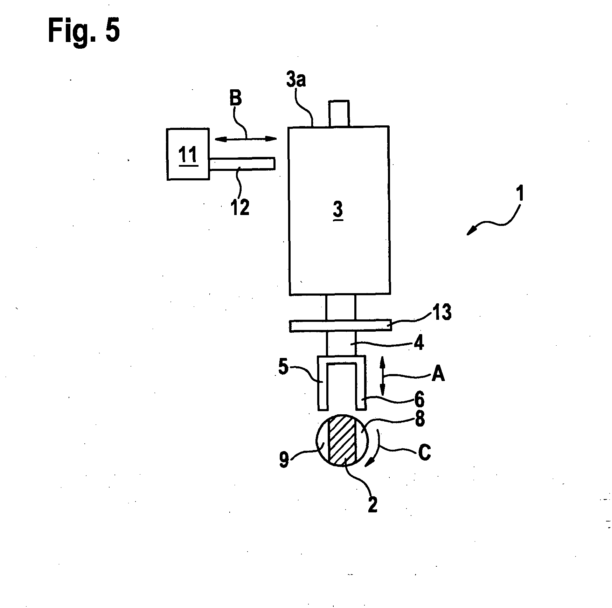

Figur 5 zeigt einen Lenkantrieb gemäß einem dritten Ausführungsbeispiel der Erfindung, wobei gleiche bzw. funktional gleiche Teile wieder mit den gleichen Bezugszeichen wie in den vorhergehenden Ausführungsbeispielen bezeichnet sind.

Wie aus Figur 5 ersichtlich ist, entspricht das dritte Ausführungsbeispiel im Wesentlichen dem zweiten Ausführungsbeispiel, wobei eine Position der Arretiereinrichtung 11 zum zweiten Ausführungsbeispiel verschieden ist.

Genauer, wie aus Figur 5 ersichtlich ist, ist die Arretiereinrichtung 11 bei einem Gehäuse der Blockiereinrichtung 3 angeordnet und die Arretiereinrichtung arretiert somit die Blockiereinrichtung 3 an einem rückseitigen Gehäusebereich 3a, wenn die Blockiereinrichtung mit der Abtriebswelle 2 in Eingriff kommt. Ansonsten entspricht dieses Ausführungsbeispiel den vorhergehenden Ausführungsbeispielen, so dass auf die dort gegebene Beschreibung verwiesen werden kann.

Zu allen beschriebenen Ausführungsbeispielen sei angemerkt, dass ein alternativer Aufbau dadurch realisiert werden kann, dass die Arme 5, 6 der Blockiergabel 4 schwenkbar an einem die Arme 5, 6 verbindenden Basisbereich angeordnet sein können. Die Arme 5, 6 sind dabei beispielsweise über ein Federelement miteinander verbunden. Wenn ein Drehmoment an der Abtriebswelle 2 zu groß wird, können sich die Arme 5, 6 spreizen, so dass Beschädigungen an der Abtriebswelle bzw. der Blockiergabel vermieden werden können. Die Feder zwischen den Armen 5, 6 stellt die Arme dann wieder in die Ausgangsposition zurück, wenn die Abtriebswelle 2 um 180° gedreht wurde.

## Patentansprüche

1. Lenkvorrichtung für ein Fahrzeug, umfassend
- einen Lenkantrieb (1) mit einer Abtriebswelle (2) zur Unterstützung eines Lenkvorgangs, und
- eine Blockiereinrichtung (3), um den Lenkantrieb (1) zu blockieren,
- wobei die Blockiereinrichtung (3) am Lenkantrieb (1) direkt angeordnet ist und den Lenkantrieb unmittelbar an der Abtriebswelle (2) blockiert,
**dadurch gekennzeichnet,**
- **dass** die Lenkvorrichtung eine Arretiereinrichtung (11) umfasst, welche eine Position der Blockiereinrichtung (3) arretiert,
- und ferner ein gemeinsames Steuergerät umfasst, welches ausgelegt ist, den Lenkantrieb (1) und die Blockiereinrichtung (3) zu steuern,
- wobei das Steuergerät ausgelegt ist, die Arretiereinrichtung zu steuern und wobei die Arretiereinrichtung (11) nach der Blockiereinrichtung (3) aktivierbar ist.

2. Lenkvorrichtung nach Anspruch 1, **dadurch gekennzeichnet, dass** die Blockiereinrichtung (3) eine Blockiergabel (4) mit zwei Armen (5, 6) umfasst und die Abtriebswelle (2) zwei abgeflachte Bereiche (8, 9) für einen Kontakt mit den Armen (5, 6) der Blockiergabel (3) aufweist, oder die Abtriebswelle (2) einen zusätzlichen Adapter mit zwei abgeflachten Bereichen aufweist.

3. Lenkvorrichtung nach einem der vorhergehenden Ansprüche, **dadurch gekennzeichnet, dass** eine Verfahrrichtung (A) der Blockiereinrichtung (3) senkrecht zu einer Mittelachse (X-X) der Abtriebswelle (2) ist.

4. Lenkvorrichtung nach Anspruch 3, **dadurch gekennzeichnet, dass** die Arretiereinrichtung (11) einen Sperrschieber (12) oder einen Haken umfasst.

5. Lenkvorrichtung nach einem der Ansprüche1 bis 4, ferner umfassend eine Diagnosevorrichtung zur Überprüfung einer erfolgreichen Aktivierung der Arretiereinrichtung (11), wobei die Diagnosevorrichtung insbesondere eine Stromaufnahme der Arretiereinrichtung überprüft.

6. Verfahren zum Blockieren einer Lenkvorrichtung eines Fahrzeugs, wobei das Blockieren der Lenkvorrichtung unmittelbar an einer Abtriebswelle (2) eines Lenkantriebs (1) ausgeführt wird, **dadurch gekennzeichnet, dass** nach einem Blockieren der Abtriebswelle des Lenkantriebs mittels einer Blockiereinrichtung (3) die Blockiereinrichtung (3) mittels einer Arretiereinrichtung (11) arretiert wird, wobei der Lenkantrieb (1), die Blockiereinrichtung (3) und die Arretiereinrichtung (11) von einem gemeinsamen Steuergerät gesteuert werden, wobei die Arretiereinrichtung (11) nach der Blockiereinrichtung (3) aktivierbar ist.

## Claims

1. Steering device for a vehicle, comprising
- a steering drive (1) having an output shaft (2) for assisting a steering process, and
- a blocking device (3) for blocking the steering drive (1),
- wherein the blocking device (3) is arranged directly on the steering drive (1) and blocks the steering drive immediately at the output shaft (2),
**characterized in that**
- the steering device comprises a locking device (11) which locks a position of the blocking device (3),
- and also comprises a common control device which is configured to control the steering drive (1) and the blocking device (3),
- wherein the control device is configured to control the locking device and wherein the locking device (11) can be activated after the blocking device (3).

2. Steering device according to Claim 1, **characterized in that** the blocking device (3) comprises a blocking fork (4) with two arms (5, 6), and the output shaft (2) has two flattened regions (8, 9) for contact with the arms (5, 6) of the blocking fork (3), or the output shaft (2) has an additional adapter with two flattened regions.

3. Steering device according to one of the preceding claims, **characterized in that** a movement direction (A) of the blocking device (3) is perpendicular to a central axis (X-X) of the output shaft (2).

4. Steering device according to Claim 3, **characterized in that** the locking device (11) comprises a locking slide (12) or a hook.

5. Steering device according to one of Claims 1 to 4, also comprising a diagnostic device for checking successful activation of the locking device (11), wherein the diagnostic device checks, in particular, a power drain of the locking device.

6. Method for blocking a steering device of a vehicle, wherein the blocking of the steering device is carried out immediately at an output shaft (2) of a steering drive (1), **characterized in that** after a blocking of the output shaft of the steering drive by means of a blocking device (3), the blocking device (3) is locked by means of a locking device (11), wherein the steering drive (1), the blocking device (3) and the locking device (11) are controlled by a common control device, wherein the locking device (11) can be activated after the blocking device (3).

## Revendications

1. Système de direction pour un véhicule, comprenant
- un entraînement de direction (1) avec un arbre de sortie (2) pour assister une opération de direction, et
- un dispositif de blocage (3), destiné à bloquer l'entraînement de direction (1),
- dans lequel le dispositif de blocage (3) est disposé directement sur l'entraînement de direction (1) et bloque l'entraînement de direction immédiatement à l'arbre de sortie (2),
**caractérisé en ce que**
- le système de direction comprend un dispositif d'arrêt (11), qui arrête une position du dispositif de blocage (3),
- et comprend en outre un appareil de commande commun, qui est conçu de façon à commander l'entraînement de direction (1) et le dispositif de blocage (3),
- dans lequel l'appareil de commande est conçu de façon à commander le dispositif d'arrêt et dans lequel le dispositif d'arrêt (11) peut être activé après le dispositif de blocage (3).

2. Système de direction selon la revendication 1, **caractérisé en ce que** le dispositif de blocage (3) comprend une fourche de blocage (4) avec deux bras (5, 6) et l'arbre de sortie (2) présente deux zones aplaties (8, 9) pour un contact avec les bras (5, 6) de la fourche de blocage (3), ou l'arbre de sortie (2) présente un adaptateur supplémentaire avec deux zones aplaties.

3. Système de direction selon l'une quelconque des revendications précédentes, **caractérisé en ce qu'**une direction de déplacement (A) du dispositif de blocage (3) est perpendiculaire à un axe central (X-X) de l'arbre de sortie (2).

4. Système de direction selon la revendication 3, **caractérisé en ce que** le dispositif d'arrêt (11) comprend un curseur de blocage (12) ou un crochet.

5. Dispositif de direction selon l'une quelconque des revendications 1 à 4, comprenant en outre un dispositif de diagnostic pour la vérification d'une activation réussie du dispositif d'arrêt (11), dans lequel le dispositif de diagnostic vérifie en particulier une consommation de courant du dispositif d'arrêt.

6. Procédé pour le blocage d'un système de direction d'un véhicule, dans lequel on opère le blocage du système de direction directement sur un arbre de sortie (2) d'un entraînement de direction (1), **caractérisé en ce qu'**après un blocage de l'arbre de sortie de l'entraînement de direction au moyen d'un dispositif de blocage (3), on arrête le dispositif de blocage (3) au moyen d'un dispositif d'arrêt (11), dans lequel on commande l'entraînement de direction (1), le dispositif de blocage (3) et le dispositif d'arrêt (11) au moyen d'un appareil de commande commun, le dispositif d'arrêt (11) pouvant être activé après le dispositif de blocage (3).
